(19) **Europäisches Patentamt**

**European Patent Office**

**Office européen des brevets**

(11) **EP 1 059 634 A1**

(12) **EUROPEAN PATENT APPLICATION**
published in accordance with Art. 158(3) EPC

(43) Date of publication:
**13.12.2000 Bulletin 2000/50**

(51) Int. Cl.[7]: **G11B 7/24**

(21) Application number: **99905332.5**

(22) Date of filing: **01.03.1999**

(86) International application number:
**PCT/JP99/00983**

(87) International publication number:
**WO 99/45538 (10.09.1999 Gazette 1999/36)**

(84) Designated Contracting States:
**DE FR GB**

(30) Priority: **02.03.1998 JP 4961298**
**26.03.1998 JP 7891798**
**07.05.1998 JP 12466098**

(71) Applicant: **Kao Corporation**
**Tokyo 103-0025 (JP)**

(72) Inventors:
- **KANEKO, Kazuhiro**
  **Kao Corporation**
  **Haga-gun, Tochigi 321-3426 (JP)**
- **ONDA, Tomohiko**
  **Kao Corporation**
  **Haga-gun, Tochigi 321-3426 (JP)**

(74) Representative:
**VOSSIUS & PARTNER**
**Siebertstrasse 4**
**81675 München (DE)**

(54) **OPTICAL RECORDING MEDIUM AND PROTECTIVE FILM THEREFOR**

(57) The invention relates to an optical recording medium having a recording film comprising a phase-change type recording material. A recording film (4) of the optical recording medium is made from chalcopyrite type compound, and a first protective film (3) and a second protective film (5) are formed by a mixed film containing ZnS and $SiO_2$. By forming at least one of the protective films with nitrogen contained therein, the recording/erasing repeatability characteristic of the optical recording medium are improved.

## FIG.1

## Description

TECHNICAL FIELD

The present invention relates to an optical recording medium having a recording film comprising a phase-change type recording material, and an optical recording medium protective film suitable for the optical recording medium.

RELATED BACKGROUND ART

Optical recording media capable of high density recording, as well as erasing and rewriting of recorded information are now given much attention. With a phase-change type optical recording medium among these rewritable optical recording media, the crystal state of the recording film is changed by irradiating a laser beam thereto, and the change of reflectance of the recording film accompanying such a change of state is detected.

As materials of a recording film of the phase-change type optical recording media, there are often adopted Ge-Te type materials which have a large difference of reflectance between crystal state and amorphous state, and have a relatively large stability in an amorphous state. The representative examples of such materials include chalcogen-type alloy materials such as Ge-Ta, Ge-Te-Sb-S, Ge-Ta-S, Ge-Se-S, Ge-Se-Sb, Ge-As-Se, In-Ta, Se-Ta, Se-As, as disclosed in U.S. Pat. No. 3,530,441.

Further, there have been proposed: the Ge-Te alloy materials such as added with Au (Japanese Unexamined Patent Publication No. 61-219692), Sn and Au (Japanese Unexamined Patent Publication No. 61-270190), Pd (Japanese Unexamined Patent Publication No. 62-19490) aiming at improving the stability and high crystallization speed; and the Ge-Te-Se-Sb material with a specified composition ratio aiming at improving the recording/erasing repeatability characteristics (Japanese Unexamined Patent Publication No. 62-73438).

However, none of these materials completely satisfies all of the characteristics required in a recording film of a phase-change type rewritable optical recording medium. Particularly, it has become the most important object to improve the recording sensitivity and erasing sensitivity, to avoid deterioration of erase ratio due to incomplete erasure at the time of overwriting, and to extend the life span of recording/erasing repeatability characteristic.

In view of the above, it has been recently proposed to apply a compound called "chalcopyrite" having a composition represented by I b-III b-VIb$_2$ or II b-IVb-Vb$_2$ in terms of the chemical periodic table, to the recording film material. It is known that, among these chalcopyrite type compounds, AgInTe$_2$ can be particularly used as a goad material for the recording film of an optical recording medium, by diluting it such as with Sb and Bi (Japanese Unexamined Patent Publication Nos. 3-240590, 3-99884, 3-82593, and 3-73384). In addition there are disclosed other phase-change type optical recording media in which an AgSbTe$_2$ phase is created upon crystallization of a recording film, such as in Japanese Unexamined Patent Publication Nos. 4-267192, 4-232779, and 6-166268.

The optical recording medium using this chalcopyrite type recording film material has certainly excellent C/N, erase ratio, modulation factor and recording sensitivity, however it has a problem in that the life span of recording/erasing repeatability is only about 1,000 times.

To solve this problem, the present inventors developed an Au-In-Sb-Te recording film material having a specific composition, and filed applications (Japanese Patent Application Nos. 9-46225, 9-210745 and 9-285785). This recording film material has excellent C/N, erase ratio, modulation factor, recording sensitivity and recording/erasing repeatability characteristic. Particularly, the life span of recording/erasing repeatability characteristic is extraordinarily longer than the aforesaid recording film material having the AgSbTe$_2$ phase, being as large as 10,000 times at a linear velocity of 1 to 3 m/s, and 100,000 times at a linear velocity of 5 to 7 m/s. Thus, it has exceedingly good properties as a phase-change type optical recording medium.

However, even if the above described Au-In-Sb-Te recording film material is used, the life span of recording/erasing repeatability does not always exceed 100,000 times at all linear velocities, and it still has a problem in that the life span of recording/erasing repeatability is not sufficient, compared to the fact that the life span of recording/erasing repeatability of magneto-optical disks is 1 million times.

DISCLOSURE OF THE INVENTION

In view of the aforementioned heretofore problems, it is an object of the present invention to provide an optical recording medium having even more excellent recording/erasing repeatability characteristic and an optical recording medium protective film suitable for the optical recording medium.

In order to achieve the above object, in an optical recording medium of the present invention obtained by laminating at least a first protective film, a recording film, a second protective film and a reflective film in that order on a substrate substantially transparent with respect to a light beam to be used, the second protective film comprises a mixed film of ZnS and $SiO_2$, and the first protective film contains nitrogen in a mixed film of ZnS and $SiO_2$, such that the concentration of nitrogen is higher on the recording film side than on the substrate side.

Specifically, the first protective film may be a composite film having a mixed film of ZnS and $SiO_2$ on the substrate side, and having a mixed film containing ZnS, $SiO_2$ and nitrogen on the recording film side. Alternatively, the first protective film may comprise a mixed film containing ZnS and $SiO_2$ and nitrogen, such that the nitrogen concentration on a face on the substrate side of the film is approximately 0 atomic %, with the nitrogen concentration gradually increasing from the substrate side toward the recording film side. Here, the nitrogen concentration gradually increasing means that the concentration never decreases (but may remain at a certain value).

The effect of improving the recording/erasing repeatability characteristic is extremely remarkable when the recording film comprises an Au-In-Sb-Te alloy, an Ag-In-Sb-Te alloy, an Ag-In-Sb-Te-V alloy, a Cu-In-Sb-Te alloy, a Pd-In-Sb-Te alloy, or the like, and in particular, when the recording film comprises an Au-In-Sb-Te alloy.

In a rewritable optical recording medium, a technique where it is possible that the protective film contains ZnS, $SiO_2$ and nitrogen (N) can be found for example in Japanese Examined Patent Publication No. 7-111786, and Japanese Unexamined Patent Publication Nos. 6-4904, 6-342529, and 9-198712.

In Japanese Unexamined Patent Publication No. 6-4904 however, the requirement thereof is that hydrogen is contained in addition to ZnS, $SiO_2$ and nitrogen. Hence the constituent elements do not coincide with those of the present invention. Also in Japanese Unexamined Patent Publication No. 9-198712, the requirement is that $Si_3N_4$ is contained in addition to ZnS and $SiO_2$. Hence the constituent elements do not coincide with those of the present invention.

On the other hand, in Japanese Examined Patent Publication No. 7-111786, there are disclosed an optical recording medium having a constituent requirement that nitrogen is contained in addition to ZnS and $SiO_2$, and an optical recording medium protective film. In Japanese Examined Patent Publication No. 7-111786 however, it is recognized that the protective film obtained by containing nitrogen in a ZnS-$SiO_2$ mixed film has a uniform nitrogen concentration in the direction of film thickness, and the nitrogen concentration distribution is not provided as with the present invention. Moreover, with the present invention, it is shown that when the ZnS-$SiO_2$-N mixed film having a nitrogen concentration distribution is combined with a recording film comprising a chalcopyrite type compound such as Au-In-Sb-Te alloy or the like, the effect of improving the rewriting life becomes remarkable. However, in Japanese Examined Patent Publication No. 7-111756, such a description or suggestion cannot be found.

Furthermore, in Japanese Unexamined Patent Publication No. 6-342529, there is disclosed a phase-change type optical recording medium having a wide range of constituent requirement that a supplementary film containing nitrogen is provided between a protective film and a recording film. According to this publication, it is recognized that the insertion of the supplementary film may be between a first protective film and the recording film, or between a second protective film and the recording film, but on balance, insertion of the supplementary film between the second protective film and the recording film is mainly studied, as shown in the examples in the publication. On the other hand, with the present invention, the requirement is that the ZnS-$SiO_2$-N mixed film having the nitrogen concentration distribution is used particularly for the first protective film, which is different from Japanese Unexamined Patent Publication No. 6-342529. Also, with the present invention, it is shown that when the ZnS-$SiO_2$-N mixed film having the nitrogen concentration distribution is combined with the recording film comprising a chalcopyrite type compound such as Au-In-Sb-Te alloy or the like, the effect of improving the rewriting life becomes remarkable. However, in Japanese Unexamined Patent Publication No. 6-342529, such a description or suggestion cannot be found.

With the present invention, the molar number of $SiO_2$ contained in the first protective film is preferably from 10% to 40% of the molar number of ZnS. If the $SiO_2$ ratio is less than 10%, the crystalline particle diameter increases, thereby deteriorating the compactness of the film. On the other hand, if the $SiO_2$ ratio exceeds 40%, the refractive index of the mixed film decreases, which is not preferable in view of the optical properties. Moreover, in the first protective film, other elements such as oxygen, hydrogen, carbon, fluorine or the like may be contained in a range that does not have much influence.

The ZnS-$SiO_2$ mixed film wherein the molar ratio of $SiO_2$ to ZnS is given in the above described range, is substantially transparent with respect to light beams having a wavelength of from 350 nm to 850 nm generally used for the optical recording medium, and has excellent performance as the optical recording medium protective film, for example, having a higher melting point than the recording film substance, and a suitable hardness and flexibility. However, there is a limitation to the number of repetitions of recording/erasing of the optical recording medium, since the protective film deteriorates with repetition of heating and cooling at the time of performing recording/erasing, or elements (particularly, sulfur) in the protective film diffuse into the recording film to deteriorate the performance of the recording film. Particularly, the above described limitation in the life span of recording/erasing repeatability associated with the protective film is conspicuous when the chalcopyrite type compound such as Ag-In-Sb-Te alloy, Au-In-Sb-Te alloy or the like is used. When a protective film comprising ZnS and $SiO_2$ is used in combination with a recording film comprising Ge-Sb-Te alloy, recording/erasing repeatability is possible for about 100,000 times, while when the protective film comprising ZnS and $SiO_2$ is used in combination with a recording film comprising the chalcopyrite type compound, the repeatability life span remains in a range of from 1,000 to several ten thousand times.

To solve such a problem, there has been heretofore considered a method in which nitrogen is contained in a ZnS and $SiO_2$ mixed film to give a dense film having less defects. However, even if nitrogen is contained uniformly over the first protective film, the effect of blocking diffusion of elements in the first protective film into the recording film is small. Moreover, if nitrogen is contained uniformly over the first protective film, the overall film becomes hard, thereby decreasing flexibility of the film, instead. As a result, durability of the first protective film decreases with repetition of expansion and contraction accompanying heating and cooling of the recording film.

With the present invention, therefore, nitrogen concentration distribution in the direction of film thickness is introduced in the first protective film to provide a hard portion and a flexible portion in the first protective film, to thereby prevent deterioration of the first protective film with expansion and contraction at the time of recording/erasing. Moreover, to prevent the elements (particularly, sulfur) in the first protective film from diffusing into the recording film, nitrogen concentration is made higher in the region dose to the recording film. By providing such nitrogen concentration distribution, diffusion of sulfur or the like can be effectively prevented. As a result, improvement in the repeatability life span can be remarkably realized, particularly in an optical recording medium using a recording film comprising a chalcopyrite type compound such as Ag-In-Sb-Te alloy or the like.

In the present invention, from the same reason as in the first protective film, the molar number of $SiO_2$ contained in the second protective film is preferably from 10% to 40% of the molar number of ZnS. Moreover, in the second protective film, other elements such as nitrogen, oxygen, hydrogen, carbon, fluorine or the like may be contained in a range that does not cause a large deterioration in the performance.

Even if a ZnS- $SiO_2$-N mixed film having a nitrogen concentration distribution such as that used for the first protective film is used for the second protective film, a large improvement in the recording/erasing repeatability characteristic cannot be expected. This is because since the second protective film comes in contact with a reflective film having a high heat dissipation effect, the second protective film does not reach a high temperature compared to the first protective film. Hence diffusion of elements (particularly, sulfur) from the second protective film to the recording film does not occur so often. Needless to say, a ZnS- $SiO_2$-N mixed film used for the first protective film may be used for the second protective film, but since the production process becomes complicated, the merit is small.

In the present invention, it is preferable to use an Au-In-Sb-Te alloy for the recording film, and it is also preferable that the composition ratio of Au, In, Sb and Te respectively represented by $\alpha$, $\beta$, $\gamma$ and $\delta$ is 0 atomic % < $\alpha \leq$ 25 atomic %, 1 atomic % $\leq \beta \leq$ 18 atomic %, 30 atomic % $\leq \gamma \leq$ 75 atomic %, and 15 atomic % $\leq \delta \leq$ 45 atomic % (provided that 99 atomic % $\leq \alpha + \beta + \gamma + \delta \leq$ 100 atomic % ). Particularly, in an optical recording medium used for a situation where the relative speed of the recording film with respect to the light beam at the time of recording and erasing is 1 to 3 m/s, it is preferable that the above described $\alpha$ and $\beta$ are respectively 0 atomic % < $\alpha \leq$ 25 atomic % and 7 atomic % $\leq \beta \leq$ 18 atomic %, and the above described $\gamma$ and $\delta$ are such that when 30 atomic % $\leq \gamma <$ 45 atomic %, 32 atomic % $\leq \delta \leq$ 45 atomic %, when 45 atomic % $\leq \gamma <$ 49 atomic %, 30 atomic % $\leq \delta \leq$ 45 atomic %, and when 49 atomic % $\leq \gamma \leq$ 55 atomic %, 35 atomic % $\leq \delta \leq$ 45 atomic %, provided that 99 atomic % $\leq \alpha + \beta + \gamma + \delta \leq$ 100 atomic % . Moreover, in an optical recording medium used for a situation where the relative speed of the recording film with respect to the light beam at the time of recording and erasing is 3 to 5 m/s, it is preferable that the above described $\alpha$, $\beta$, $\gamma$ and $\delta$ are respectively 0 atomic % < $\alpha \leq$ 22 atomic %, 4 atomic % $\leq \beta \leq$ 18 atomic %, 33 atomic % $\leq \gamma <$ 62 atomic %, and 26 atomic % $\leq \delta \leq$ 42 atomic %, provided that 99 atomic % $\leq \alpha + \beta + \gamma + \delta \leq$ 100 atomic % . Furthermore, in an optical recording medium used for a situation where the relative speed of the recording film with respect to the light beam at the time of recording and erasing is 5 to 7 m/s, it is preferable that the above described $\alpha$, $\beta$, $\gamma$ and $\delta$ are respectively 1 atomic % $\leq \alpha \leq$ 16 atomic %, 8 atomic % $\leq \beta \leq$ 17 atomic %, $\leq \gamma \leq$ 63 atomic %, and 24 atomic % $\leq \delta$ 36 atomic %, provided that 99 atomic % $\leq \alpha + \beta + \gamma + \delta \leq$ 100 atomic % , or the above described $\alpha$, $\beta$, $\gamma$ and $\delta$ are 0 atomic % < $\alpha \leq$ 17 atomic %, 3 atomic % $\leq \beta \leq$ 8 atomic %, 51 atomic % $\leq \gamma \leq$ 67 atomic %, and 26 atomic % $\leq \delta \leq$ 33 atomic %, provided that 99 atomic % $\leq \alpha + \beta + \gamma + \delta \leq$ 100 atomic % . In addition, in an optical recording medium used for a situation where the relative speed of the recording film with respect to the light beam at the time of recording and erasing is 7 to 20 m/s, it is preferable that that the above described $\alpha$, $\beta$, $\gamma$ and $\delta$ is respectively 0 atomic % < $\alpha \leq$ 25 atomic %, 1 atomic % $\leq \beta \leq$ 17 atomic %, 43 atomic % $\leq \gamma \leq$ 75 atomic %, and 15 atomic % $\leq \delta \leq$ 34 atomic %, provided that 99 atomic % $\leq \alpha + \beta + \gamma + \delta \leq$ 100 atomic % .

In the present invention, if the composition ratio $\alpha$ of Au becomes 0, the crystallization transition rate decreases, and erase ratio decreases. Recording/erasing repeatability life span also decreases. If $\alpha$ exceeds the above range, the crystallization transition rate becomes too fast, hence sufficient recording becomes difficult.

If the composition ratio $\beta$ of In is less than the above described range, the crystallization transition rate decreases, and erasing becomes difficult. Recording/erasing repeatability life span also decreases. If $\beta$ exceeds the above range, the crystallization transition rate increases, but the modulation factor is difficult to obtain.

If the composition ratio $\gamma$ of Sb is less than the above described range, the crystallization transition rate decreases, and erasing becomes difficult. If $\gamma$ exceeds the above range, the crystallization transition rate becomes too fast, hence sufficient recording becomes difficult. Also, the modulation factor decreases.

If the composition ratio $\delta$ of Te is less than the above described range, the crystallization transition rate becomes too fast, hence sufficient recording becomes difficult. If δ exceeds the above range, the crystallization transition rate decreases, and erasing becomes difficult. Also, an absorption coefficient increases, so that an optical interference effect due to multiple reflections on a dielectric layer decreases, to thereby decrease C/N.

In the recording film, other elements, for example, Cu, Ag, Ni, Fe, Ge, Se, S, Sn, Pd, V, As, C, N, O or the like may be contained as impurities in small amounts, in addition to the above described respective elements, Au, In, Sb and Te, but the total content of these elements is preferably not larger than 1% in atom ratio.

The protective film for the optical recording medium of the present invention is characterized in that nitrogen is contained in a ZnS and $SiO_2$ mixed film, and the concentration of the nitrogen is made higher on one side than on the other side in the direction of film thickness.

Specifically, the protective film for the optical recording medium may be a composite film with the one side comprising a mixed film containing ZnS, $SiO_2$ and nitrogen, and the other side comprising a mixed film of ZnS and $SiO_2$, or may be a mixed film containing ZnS, $SiO_2$ and nitrogen, with the nitrogen concentration on a face of the other side of the film being substantially 0 atomic %, and gradually increasing toward the one side.

As described above, the recording/erasing repeatability characteristic of the optical recording medium can be improved by using a protective film having such a construction.

In the protective film for the optical recording medium of the present invention, the molar number of $SiO_2$ is preferably from 10% to 40% of the molar number of ZnS. If the molar number of $SiO_2$ is less than 10%, the crystalline particle diameter increases, thereby deteriorating the compactness of the film. On the other hand, if the molar number of $SiO_2$ exceeds 40%, the refractive index of the mixed film decreases, which is not preferable in view of the optical properties. Moreover, in the protective film for the optical recording medium, other elements such as oxygen, hydrogen, carbon, fluorine or the like may be contained in a range that does not have much influence.

BRIEF DESCRIPTION OF THE DRAWINGS

FIG. 1 is a sectional view showing one example of a layer construction of an optical recording medium of the present invention.

FIG. 2 is a sectional view showing another example of a layer construction of an optical recording medium of the present invention.

FIG. 3 is a sectional view showing yet another example of a layer construction of an optical recording medium of the present invention.

BEST MODE FOR CARRYING OUT THE INVENTION

Preferred embodiments of the present invention will now be described below with reference to drawings.

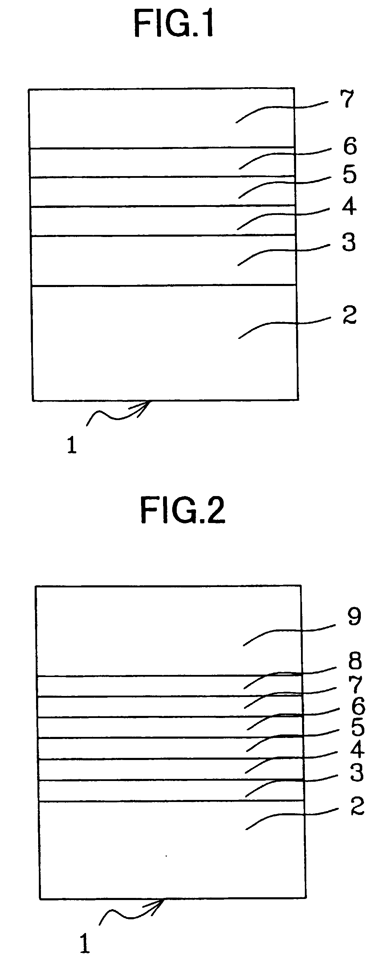

FIG. 1 to FIG. 3 are sectional views showing examples of preferred constructions of optical recording media of the present invention.

An optical recording medium 1 shown in FIG. 1 is an optical recording medium for single-side recording having a construction in which a first protective film 3, a recording film 4, a second protective film 5, a reflective film 6 and a lacquer layer 7 are laminated in that order on a substrate 2.

Moreover, the optical recording medium 1 shown in FIG. 2 is an optical recording medium for single-side recording, wherein mechanical strength is increased by laminating a first protective film 3, a recording film 4, a second protective film 5, a reflective film 6, a lacquer layer 7, an adhesive layer 8 and an upper substrate 9 in that order on a substrate 2.

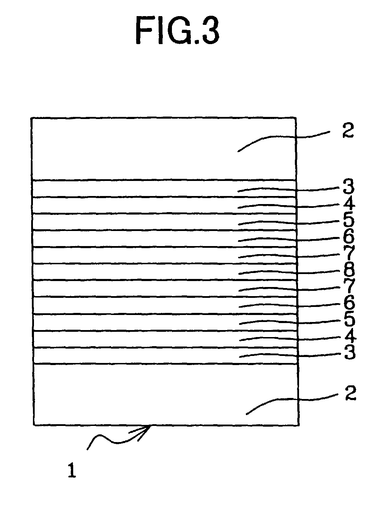

Furthermore, the optical recording medium 1 shown in FIG. 3 is an optical recording medium for double-side recording, wherein a first protective film 3, a recording film 4, a second protective film 5, a reflective film 6 and a lacquer layer 7 are laminated in that order on each of two substrates 2, respectively, and these two optical recording media are joined via an adhesive layer 8, with the lacquer layer 7 sides facing each other With the optical recording medium shown in FIG. 2 and FIG. 3, the lacquer layer 7 may be omitted.

Other than the above described construction, it is also possible in order to improve the C/N, erase ratio, modulation factor, recording sensitivity, life span of recording/erasing repeatability or the like, that the optical recording medium has a construction such that one or a plurality of supplementary layers are inserted between the substrate 2 and the first protective film 3, and/or between the first protective film 3 and the recording film 4, and/or between the recording film 4 and the second protective film 5, and/or between the second protective film 5 and the reflective film 6, of the optical recording medium 1 shown in FIG. 1 to FIG. 3. In such a case, the substance constituting the supplementary layer is preferably a dielectric, a metal or the like.

The substrate 2 is preferably made of a material having transparency to light beams to be used, such as resin and glass. Resin is particularly preferable from the aspect of ease of handling, and lower cost. Concrete examples of resin include polycarbonate resin, acrylic resin, epoxy resin, ABS resin, and the like. Although the shape and dimension of the substrate are not particularly limited, the substrate is typically a disk-shape, its thickness is typically in the order of from 0.5 mm to 3 mm, and its diameter is typically in the order of from 40 mm to 360 mm. Further, the surface of substrate may be provided with a predetermined pattern such as grooves such as for tracking and/or addressing, as required.

The first protective film 3 and the second protective film 5 have functions to: enhance the modulation factor (difference between reflectances in crystal state and amorphous state) by magnifying a change of reflectance caused by a change of crystal state of recording film 4 by multiple reflection between these films 3 and 5; and to emit the residual heat in the recording film 4 during recording, at an appropriate rate by thermal conduction.

The first protective film 3 contains nitrogen (N) in a ZnS and $SiO_2$ mixed film, and is formed such that the nitrogen concentration is higher on the recording film 4 side than on the substrate 2 side. Specifically, for example, the protective film 3 may be a composite film having a ZnS and $SiO_2$ mixed film on the substrate side and a mixed film containing ZnS, $SiO_2$ and nitrogen on the recording film side. Alternatively, the protective film 3 may comprise a mixed film containing ZnS, $SiO_2$ and nitrogen, such that the nitrogen concentration on a face on the substrate side of the film is approximately 0 atomic %, with the nitrogen concentration gradually increasing from the substrate side toward the recording film side. Here, the nitrogen concentration gradually increasing means that the concentration never decreases (but may remain at a certain value). In addition, the molar number of $SiO_2$ contained in the first protective film is preferably from 10% to 40% of the molar number of ZnS.

The ZnS and $SiO_2$ mixed film wherein the molar ratio of $SiO_2$ to ZnS is given in the above described range, is substantially transparent with respect to light beams having a wavelength of from 350 nm to 850 nm generally used for the optical recording medium, and has excellent performance as the optical recording medium protective film, for example, having a higher melting point than the recording film substance, and a suitable hardness and flexibility. However, there is a limitation to the number of repetitions of recording/erasing of the optical recording medium, since the protective film deteriorates with repetition of heating and cooling at the time of performing recording and erasing, or elements (particularly, sulfur) in the protective film diffuse into the recording film to deteriorate the performance of the recording film. Particularly, the above described limitation in the life span of recording/erasing repeatability associated with the protective film is conspicuous when the chalcopyrite type compound such as Ag-In-Sb-Te alloy, Au-In-Sb-Te alloy or the like is used. When a protective film comprising ZnS and $SiO_2$ is used in combination with a recording film comprising Ge-Sb-Te alloy, repetition of recording/erasing is possible for about 100,000 times, while when the protective film comprising ZnS and $SiO_2$ is used in combination with a recording film comprising the chalcopyrite type compound, the repeatability life span remains in a range of from 1,000 to several ten thousand times. Deterioration in the protective film with repetition of heating and cooling should occur regardless of the kinds of recording film. Hence it can be considered that the difference in the repeatability life span between the Ge-Sb-Te alloy and the chalcopyrite type compound is based on the fact that the recording film comprising the Ge-Sb-Te alloy does not deteriorate largely due to being diffused and mixed with the elements (particularly, sulfur) in the protective film, while the recording film comprising the chalcopyrite type compound largely deteriorates.

In order to solve such a problem, there has been heretofore considered a method in which nitrogen is contained in the ZnS and $SiO_2$ mixed film to give a dense film having less defects. However, even if nitrogen is contained uniformly over the first protective film 3, the effect of blocking diffusion of elements in the first protective film into the recording film is small. Moreover, if nitrogen is contained uniformly over the first protective film 3, the overall film becomes hard, thereby decreasing flexibility of the film instead. As a result, durability of the first protective film 3 decreases with repetition of expansion and contraction accompanying heating and cooling of the recording film 4.

According to this embodiment, therefore, nitrogen concentration distribution in the direction of film thickness is introduced in the first protective film 3 to provide a hard portion and a flexible portion in the first protective film 3, to thereby prevent deterioration of the first protective film 3 with expansion and contraction at the time of recording/erasing. Moreover, to prevent the elements (particularly, sulfur) in the first protective film 3 from diffusing into the recording film 4, nitrogen concentration is made higher in the region close to the recording film 4. By providing such nitrogen concentration distribution, diffusion of sulfur or the like can be effectively prevented. As a result, improvement in the repeatability life span can be remarkably realized, particularly in an optical recording medium 1 using a recording film 4 comprising a chalcopyrite type compound such as Ag-In-Sb-Te alloy, Au-In-Sb-Te alloy or the like.

Such a first protective film 3 can be prepared, for example, by two methods as described below. The first method is to sputter a ZnS- $SiO_2$ target in an atmosphere of argon gas, and form a mixed film of ZnS and $SiO_2$ on a substrate 2 in a suitable thickness. Thereafter, $N_2$ gas is gradually added to the argon gas, and sputtering (reactive sputtering) is continued while gradually increasing the partial pressure of $N_2$ gas, to thereby form a ZnS- $SiO_2$-N mixed film. At this time, as the way to increase the partial pressure of $N_2$ gas, the partial pressure may be simply increased at a certain rate, or may be stepwisely increased. The nitrogen concentration distribution in the first protective film 3 is determined by the way to increase the $N_2$ gas partial pressure. The second method is such that after a ZnS and $SiO_2$

mixed film is formed on the substrate 2 in the same manner as with the first method, the substrate 2 is shifted to another chamber having an atmosphere of Ar + $N_2$ gas at a certain concentration, and reactive sputtering is performed using a ZnS- $SiO_2$ target to form a ZnS- $SiO_2$-N mixed film. Furthermore, as required, while the substrate 2 is shifted for a required number of times to a chamber having an atmosphere of Ar + $N_2$ gas at a higher $N_2$ gas concentration, reactive sputtering is continued, to thereby prepare a ZnS- $SiO_2$-N mixed film in which the nitrogen concentration is increased in the form of a multi-layer film. In the above described two methods, the $N_2$ gas partial pressure in the atmospheric gas is preferably not lower than 0.01 Pa and not higher than 0.7 Pa. If the partial pressure is lower than 0.01 Pa, the effect of mixing nitrogen in the first protective film 3 is not remarkable. Moreover, if the partial pressure is higher than 0.7 Pa, film-creating efficiency decreases.

In addition to these methods, the first protective film 3 may be formed by the vapor phase growth method such as a vacuum deposition method, a plasma CVD method, an optical CVD method, an electron beam deposition method or the like, while applying the above described method. In the first protective film 3, other elements such as oxygen, hydrogen, carbon, fluorine or the like may be contained in a range that does not have much influence.

From a standpoint of optical properties for obtaining high modulation factor, the thickness of the first protective film 3 is preferably from 50 to 300 nm. Moreover, the thickness of a portion where nitrogen is not contained in the first protective film 3 is preferably at least 30 nm. If the thickness thereof is smaller than 30 nm, the flexibility of the film decreases, and durability of the film against repetition of expansion and contraction decreases.

The second protective film 5 is a mixed film containing ZnS and $SiO_2$. Here, from the same reason as with the first protective film 3, the molar number of $SiO_2$ contained in the second protective film 5 is preferably from 10% to 40% of the molar number of ZnS. The second protective film 5 can be formed by the vapor phase growth method such as the sputtering method, the vacuum deposition method, the plasma CVD method, the optical CVD method, the electron beam deposition method or the like. In the second protective film 5, other elements such as nitrogen, oxygen, hydrogen, carbon, fluorine or the like may be contained in a range that does not cause large deterioration in performance.

From a standpoint of optical properties for obtaining high modulation factor, the thickness of the second protective film 5 is preferably from 10 to 60 nm, or from 100 to 250 nm. Thermally, if the thickness of the second protective film 5 is thin, the effect of insulation between the recording film 4 and the reflective film 6 becomes small, and heat accumulated in the recording film 4 at the time of recording becomes rapidly scattered and lost to the reflective film 6 having a high heat dissipation action. Therefore, to realize recording/erasing using an optical recording medium 1 having a second protective film 5 as thin as from 10 to 60 nm, it is necessary that the recording film material has a high sensitivity with respect to heating due to a laser beam.

Heretofore, with an optical recording medium using a chalcogen type recording material such as Ge-Sb-Te or the like, since the recording film material does not have sufficient sensitivity, the structure thereof has been such that the thickness of the second protective film 5 is about 100 to 250 nm. On the other hand, since recording film materials of Au-In-Sb-Te type alloy and Ag-In-Sb-Te type alloy have high sensitivity with respect to heating due to a laser beam, the thickness of the second protective film 5 can be from 10 to 60 nm in the optical recording medium using these recording film materials for the recording film 4. This structure is a quenching type in which the cooling rate of the recording film 4 at the time of recording is high. Hence an edge of the recording mark is distinct, enabling densification of the recording density, and further having an advantage in that jitter is low. Moreover, since the film thickness is thin, the time required for preparing the second protective film 5 by sputtering or the like can be reduced, enabling improvement in productivity.

For the recording film 4, a chalcogen type compound such as Ge-Sb-Te alloy, a Pd-Ge-Sb-Te alloy or the like may be used, but from the reason described above, it is preferable to use chalcopyrite type compounds such as Au-In-Sb-Te alloy, Ag-In-Sb-Te alloy, Ag-In-Sb-Te-V alloy, Cu-In-Sb-Te alloy, Pd-In-Sb-Te alloy or the like. Moreover, the effect of having the first protective film comprising a ZnS- $SiO_2$-N composite film appears remarkably when a chalcopyrite type compound is used for the recording film, enabling prominent improvement in recording/erasing repeatability. The thickness of the recording film 4 is not particularly limited, but it is generally from 10 to 200 nm, and particularly preferably from 15 to 150 nm, in order to realize high reflectance and high modulation factor (the difference in reflectance between the recording condition and non-recording condition is large). Moreover, the method of forming the recording film 4 is not particularly limited, but it is preferably formed by the vapor phase growth method such as the sputtering method, the vacuum deposition method, the plasma CVD method, the optical CVD method, the electron beam deposition method or the like.

When an Au-In-Sb-Te alloy is used for the recording film 4, it is preferable that the composition ratio of Au, In, Sb and Te respectively represented by $\alpha$, $\beta$, $\gamma$ and $\delta$ is 0 atomic % < $\alpha \leq$ 25 atomic %, 1 atomic % $\leq \beta \leq$ 18 atomic %, 30 atomic % $\leq \gamma \leq$ 75 atomic %, and 15 atomic % $\leq \delta \leq$ 45 atomic % (provided that 99 atomic % $\leq \alpha + \beta + \gamma + \delta \leq$ 100 atomic % ). Particularly, in an optical recording medium used for a situation where the relative speed of the recording film with respect to the light beam at the time of recording and erasing is 1 to 3 m/s, it is preferable that the above described $\alpha$ and $\beta$ are respectively 0 atomic % < $\alpha \leq$ 25 atomic % and 7 atomic % $\leq \beta \leq$

18 atomic %, and the above described $\gamma$ and $\delta$ are such that when 30 atomic % $\leq \gamma <$ 45 atomic %, 32 atomic % $\leq \delta \leq$ 45 atomic %, when 45 atomic % $\leq \gamma <$ 49 atomic %, 30 atomic % $\leq \delta \leq$ 45 atomic %, and when 49 atomic % $\leq \gamma \leq$ 55 atomic %, 35 atomic % $\leq \delta \leq$ 45 atomic %, provided that 99 atomic % $\leq \alpha + \beta + \gamma + \delta \leq$ 100 atomic % . Moreover, in an optical recording medium used for a situation where the relative speed of the recording film with respect to the light beam at the time of recording and erasing is 3 to 5 m/s, it is preferable that the above described $\alpha$, $\beta$, $\gamma$ and $\delta$ are respectively 0 atomic % $< \alpha \leq$ 22 atomic %, 4 atomic % $\leq \beta \leq$ 18 atomic %, 33 atomic % $\leq \gamma <$ 62 atomic %, and 26 atomic % $\leq \delta \leq$ 42 atomic %, provided that 99 atomic % $\leq \alpha + \beta + \gamma + \delta \leq$ 100 atomic % . Furthermore, in an optical recording medium used for a situation where the relative speed of the recording film with respect to the light beam at the time of recording and erasing is 5 to 7 m/s, it is preferable that the above described $\alpha$, $\beta$, $\gamma$ and $\delta$ are respectively 1 atomic % $\leq \alpha \leq$ 16 atomic %, 8 atomic % $\leq \beta \leq$ 17 atomic %, 41 atomic % $\leq \gamma \leq$ 63 atomic %, and 24 atomic % $\leq \delta \leq$ 36 atomic %, provided that 99 atomic % $\leq \alpha + \beta + \gamma + \delta \leq$ 100 atomic % , or the above described $\alpha$, $\beta$, $\gamma$ and $\delta$ are 0 atomic % $< \alpha \leq$ 17 atomic %, 3 atomic % $\leq \beta \leq$ 8 atomic %, 51 atomic % $\leq \gamma \leq$ 67 atomic %, and 26 atomic % $\leq \delta \leq$ 33 atomic %, provided that 99 atomic % $\leq \alpha + \beta + \gamma + \delta \leq$ 100 atomic % . In addition, in an optical recording medium used for a situation where the relative speed of the recording film with respect to the light beam at the time of recording and erasing is 7 to 20 m/s, it is preferable that that the above described $\alpha$, $\beta$, $\gamma$ and $\delta$ is respectively 0 atomic % $< \alpha \leq$ 25 atomic %, 1 atomic % $\leq \beta \leq$ 17 atomic %, 43 atomic % $\leq \gamma \leq$ 75 atomic %, and 15 atomic % $\leq \delta \leq$ 34 atomic %, provided that 99 atomic % $\leq \alpha + \beta + \gamma + \delta \leq$ 100 atomic

In the recording film 4, other elements, for example, Cu, Ag, Ni, Fe, Ge, Se, S, Sn, Pd, V, As, C, N, O or the like may be contained as impurities in small amounts, in addition to the above described respective elements, Au, In, Sb and Te, but the total content of these elements is preferably not larger than 1% in atom ratio.

It is convenient to measure the composition of the recording film 4 using an X-ray microanalyzer, and in this embodiment, the composition is measured by this method. Other than this method, there can be considered analysis methods such as fluorescent X-ray, Rutherford backscattering, Auger electron spectroscopy, emission spectrometry and the like, but when one of these is used, it is necessary to calibrate a value obtained by using these methods with a value obtained by using the X-ray microanalyzer.

The material for the reflective film 6 is not particularly limited, and the reflective film 6 may be constituted generally from a simple substance such as Al, Au, Ag, Pt, Cu or the like, or metals having high reflectance such as alloys containing at least one of these substances, or semiconductors having high reflectance, such as Si, silicon nitride, silicon carbide or the like. The thickness of the reflective film 6 is preferably from 30 to 300 nm. If the thickness thereof is less than 30 nm, sufficient reflectance is difficult to obtain, and at the time of recording, the effect of dissipating heat remaining on the recording film 4 decreases. Moreover, if the thickness thereof exceeds 300 nm, a remarkable improvement in reflectance and heat dissipation effect cannot be seen. It is preferable to form the reflective film 6 by a vapor phase growth method such as the sputtering method, the vapor deposition method or the like.

The lacquer layer 7 is provided for improvement in excoriation resistance and corrosion resistance. The lacquer layer 7 preferably comprises various organic substances, and particularly preferably a substance obtained by curing a radiation curable compound or composition thereof by radiation such as electron beam, ultraviolet rays or the like. The lacquer layer 7 may have a thickness of generally from 0.1 to 100 $\mu$m, and may be formed by customary methods such as spin coating, gravure coating, spray coating or the like.

The adhesive layer 8 desirably comprises various organic substances, and particularly preferably, substances obtained by curing thermoplastic substance viscous substance, radiation curable compounds or the composition thereof by electron beam or radiation. The adhesive layer 8 may have a thickness of generally from 0.1 to 100 $\mu$m, and may be formed by optimal methods selected depending on the substance constituting the adhesive layer 8, such as spin coating, gravure coating, spray coating, roll coating or the like.

Moreover, the upper substrate 9 may comprise a resin the same as the above described substrate 2.

Generally, at the time of preparing a phase-change type optical recording medium, the recording film 4 is in an amorphous condition, and it is necessary to crystallize (initialize) the recording film 4 by some method, in order to obtain an overwritable optical recording medium. As the initialization method of the optical recording medium 1, there can be used various methods such as a method by means of a semiconductor laser, a method by means of an Ar laser, or a method by means of a flash lamp.

[Embodiments]

Next, the present invention will be described in detail, by way of specific embodiments, however, these embodiments by no means limit the present invention.

(Embodiment 1)

On a grooved polycarbonate substrate 2, having a diameter of 120 mm and a thickness of 1.2 mm was formed a first protective film 3, a recording film 4, a second protective film 5, a reflective film 6 and a lacquer layer 7 in that order, to give an optical recording medium 1 having a construction shown in FIG. 1. The grooves on the substrate 2 had a track pitch of 1.6 $\mu$m, a width of 0.5 $\mu$m and a depth of 50 nm.

The first protective film 3 was prepared by a sputtering method according to the following method, using ZnS- SiO$_2$ (SiO$_2$ : 20 mol%) as a target.

At first, a ZnS- SiO$_2$ film was formed by the RF sputtering method in an atmosphere of argon gas, and at the time when the thickness reached about 190 nm, a mixed gas of Ar and N$_2$ was injected as an atmospheric gas to continue the RF sputtering (RF reactive sputtering), to thereby form a composite film having a total thickness of 197 nm. At this time, the partial pressures of argon gas and N$_2$ gas in the injected mixed gas were respectively 0.36 Pa and 0.18 Pa.

The recording film 4 was prepared by the DC sputtering method, by placing each chip of In, Sb, Te, Ag on the In-Sb-Te target. The thickness of the recording film 4 was 20 nm.

The composition of recording film 4 was measured by an X-ray microanalyzer making use of an EDAX device system of Philips Co. Ltd. Namely, after preparing the recording film 4 having a thickness of about 50 nm onto a polycarbonate flat plate by the sputtering method, the energy spectrum of a sample was detected by the X-ray microanalyzer. The background such as of the polycarbonate flat plate was excluded from the detected energy spectrum, to derive the energy spectrum of the recording film 4 only. The quantification of the constituent elements of the recording film 4 was performed from this energy spectrum, so that the composition of the recording film 4 was determined.

The second protective film 5 was prepared by the RF sputtering method in an atmosphere of argon gas, using ZnS- SiO$_2$ (SiO$_2$ : 20 mol%) as a target. The thickness of the second protective film 5 was made to be 20 nm.

The reflective film 6 was prepared by the DC sputtering method, using Al as a target. The thickness thereof was made to be 75 nm.

The lacquer layer 7 was formed by applying an ultraviolet curable resin thereon by the spin coating method, and thereafter curing the resin by ultraviolet irradiation. The thickness of the lacquer layer 7 after being cured was 10 $\mu$m.

The recording film 4 after preparing the optical recording medium 1 was amorphous. Therefore, the recording film 4 was sufficiently crystallized by means of a high power semiconductor laser beam having a wavelength of 810 nm, to give an initialized condition.

Evaluation of the optical recording medium 1 was performed by irradiating a semiconductor laser beam having a wavelength of 750 nm through an objective lens having a NA of 0.5 from the substrate 2 side, and stopping down to a spot diameter of about 1 $\mu$m onto the surface of the recording film 4. At the time of recording, the laser pulse to be irradiated was made a multiple pulse shape to effect recording. The recording power was 13 mW, the erasing power was 6 mW, the bottom power of the multiple pulse was 1 mW, and the reproduction power was 1 mW.

As for the disk properties, the life span of recording/erasing repeatability was measured by the following method.

That is to say, the recording/erasing repeatability characteristic was shown in the following manner. That is, a random signal in the EFM modulation method was repeatedly overwritten at a linear velocity of 2.8 m/s, and reproduction was performed for each overwrite for a predetermined number of times at a linear velocity of 1.4 m/s to thereby measure the jitter in the 3T signal. The number of times when the jitter exceeded 35 ns was designated as the life span of recording/erasing repeatability, and was shown in a certain range of for example, "1,000 to 10,000". This shows that the properties can change in the displayed range depending on the production conditions and evaluation conditions.

The composition of the recording film and the disk properties of the optical recording medium in embodiment 1 prepared in this manner are shown in Table 1.

TABLE 1

| | Composition of recording film (atomic %) | | | | First protective film composition | Second protective film composition | Disk characteristics |
|---|---|---|---|---|---|---|---|
| | Au | In | Sb | Te | | | Recording/erasing repeatability (Number of times) |
| Embodiment 1 | 3.9 | 11.5 | 46.8 | 37.8 | ZnS-SiO$_2$-N | ZnS-SiO$_2$ | 100,000~1,000,000 |
| Embodiment 2 | 3.9 | 11.5 | 46.8 | 37.8 | ZnS-SiO$_2$-N | ZnS-SiO$_2$ | 100,000~1,000,000 |
| Embodiment 3 | 3.9 | 11.5 | 46.8 | 37.8 | ZnS-SiO$_2$-N | ZnS-SiO$_2$ | 100,000~1,000,000 |
| Embodiment 4 | 3.9 | 11.5 | 46.8 | 37.8 | ZnS-SiO$_2$-N | ZnS-SiO$_2$-N | 100,000~1,000,000 |
| Embodiment 5 | 3.9 | 11.5 | 46.8 | 37.8 | ZnS-SiO$_2$-N-O | ZnS-SiO$_2$ | 100,000~1,000,000 |
| Embodiment 6 | 5.1 | 11.8 | 43.7 | 39.4 | ZnS-SiO$_2$-N | ZnS-SiO$_2$ | 100,000~1,000,000 |
| Embodiment 7 | 13.2 | 11.7 | 37.1 | 38.0 | ZnS-SiO$_2$-N | ZnS-SiO$_2$ | 100,000~1,000,000 |
| Comparative example 1 | 3.9 | 11.5 | 46.8 | 37.8 | ZnS-SiO$_2$ | ZnS-SiO$_2$ | 10,000~30,000 |
| Comparative example 2 | 3.9 | 11.5 | 46.8 | 37.8 | ZnS-SiO$_2$ | ZnS-SiO$_2$-N | 10,000~30,000 |
| Comparative example 3 | 3.9 | 11.5 | 46.8 | 37.8 | ZnS-SiO$_2$-N (uniform) | ZnS-SiO$_2$ | 40,000~60,000 |
| Comparative example 4 | 1.0 | 7.9 | 55.4 | 35.7 | ZnS-SiO$_2$-N | ZnS-SiO$_2$ | 1 ~50 |
| Comparative example 5 | 5.3 | 18.6 | 44.5 | 31.6 | ZnS-SiO$_2$-N | ZnS-SiO$_2$ | 1 ~50 |
| Comparative example 6 | 9.8 | 17.0 | 43.3 | 29.9 | ZnS-SiO$_2$-N | ZnS-SiO$_2$ | 1 ~50 |

(Comparative Example 1)

An optical recording medium was prepared in the same manner as in embodiment 1, except that a first protective film 3 was formed without injecting a mixed gas of Ar and N$_2$ halfway. At this time, the first protective film 3 was a ZnS- SiO$_2$ (SiO$_2$: 20 mol%) mixed film having a thickness of 197 nm. The composition of the recording film and the disk properties of the optical recording medium in comparative example 1 prepared in this manner are shown in Table 1.

It is seen that with the optical recording medium in embodiment 1, the recording/erasing repeatability characteristic is improved compared to that of the optical recording medium in comparative example 1.

(Embodiment 2)

An optical recording medium was prepared in the same manner as in embodiment 1, except that a first protective film 3 was prepared in the following manner.

That is to say, a ZnS- SiO$_2$ film having a thickness of 180 nm was formed on a substrate 2 by the RF sputtering method in an atmosphere of argon gas, using ZnS-SiO$_2$ (SiO$_2$ : 20 mol%) as a target. The disk was shifted into a chamber where a mixed gas of Ar and N$_2$ was made to flow as an atmospheric gas, and the RF reactive sputtering was performed using ZnS-SiO$_2$ (SiO$_2$ : 20 mol%) as a target to thereby form a ZnS- SiO$_2$-N film having a thickness of 10 nm. The partial pressures of the argon gas and the N$_2$ gas were respectively 0.36 Pa and 0.18 Pa.

(Embodiment 3)

An optical recording medium was prepared in the same manner as in embodiment 1, except that a first protective film 3 was prepared in the following manner.

That is to say, a ZnS- SiO$_2$ film having a thickness of 150 nm was formed on a substrate 2 by the RF sputtering method in an atmosphere of argon gas, using ZnS-SiO$_2$ (SiO$_2$ : 20 mol%) as a target. The disk was shifted into a chamber where a mixed gas of Ar and N$_2$ was made to flow as an atmospheric gas, and the RF reactive sputtering was performed using ZnS- SiO$_2$ (SiO$_2$ : 20 mol%) as a target, to thereby form a ZnS- SiO$_2$-N film having a thickness of 30 nm. The partial pressures of the argon gas and the N$_2$ gas were respectively 0.45 Pa and 0.09 Pa. Moreover, the disk was shifted to another chamber where a mixed gas of argon and N$_2$ having a different concentration from that of the former chamber was made to flow as an atmospheric gas, and the RF reactive sputtering was performed using ZnS-SiO$_2$ (SiO$_2$ : 20 mol%) as a target, to thereby form a ZnS- SiO$_2$-N film having a thickness of 10 nm. The partial pressures of the argon gas and the N$_2$ gas at this time were respectively 0.36 Pa and 0.18 Pa. A composite film having a total thickness of 190 nm was formed in this manner.

(Embodiment 4)

An optical recording medium was prepared in the same manner as in embodiment 1, except that a second protective film 5 was formed by the RF sputtering method in an atmosphere of a mixed gas of argon and N$_2$, using ZnS-SiO$_2$ (SiO$_2$ : 20 mol%) as a target to form a ZnS- SiO$_2$-N film having a thickness of 20 nm. The partial pressures of the argon gas and the N$_2$ gas at this time were respectively 0.36 Pa and 0.18 Pa.

(Embodiment 5)

An optical recording medium was prepared in the same manner as in embodiment 1, except that a first protective film 3 was formed by the following method, using ZnS- SiO$_2$ (SiO$_2$ : 20 mol%) as a target.

At first, a ZnS- SiO$_2$ film was formed by the RF sputtering method in an atmosphere of argon gas, and when the thickness reached about 190 nm, a mixed gas of Ar, N$_2$ and O$_2$ was injected as an atmospheric gas to continue the RF sputtering (RF reactive sputtering), to thereby form a ZnS- SiO$_2$-N-O composite film having a total thickness of 197 nm. The partial pressures of the argon gas, the N$_2$ gas and the O$_2$ gas in the mixed gas injected at this time were respectively 0.36 Pa, 0.18 Pa and 0.05 Pa.

The composition of the recording film and the disk properties of the optical recording medium in embodiments 2 to 5 prepared in the respective methods described above are shown in Table 1.

(Comparative Example 2)

An optical recording medium was prepared in the same manner as in comparative example 1, except that a second protective film 5 was prepared in the following manner.

At first, a ZnS- SiO$_2$-N film was formed by The RF reactive sputtering method in an atmosphere of a mixed gas of argon and N$_2$, and when the thickness reached about 10 nm, only the argon gas was injected as an atmospheric gas to continue the RF sputtering, to thereby form a composite film having a total thickness of 20 nm. The partial pressure of the argon gas and the N$_2$ gas in the mixed gas at this time was respectively 0.36 Pa and 0.18 Pa

(Comparative Example 3)

An optical recording medium was prepared in the same manner as in embodiment 1, except that an entire first protective film 3 was prepared by the RF reactive sputtering method in an atmosphere of a mixed gas of argon and N$_2$, using ZnS- SiO$_2$ (SiO$_2$ : 20 mol%) as a target With this optical recording medium, the first protective film 3 became a ZnS- SiO$_2$-N film having a thickness of 197 nm with uniform nitrogen concentration distribution in the direction of film thickness.

The composition of the recording film and the disk properties of the optical recording medium in comparative examples 2 and 3 prepared in the respective methods described above are shown in Table 1.

It is seen that the above described embodiments 2 to 5 show excellent recording/erasing repeatability characteristics compared to those in comparative examples 2 and 3. Moreover, in the comparative example 2 in which nitrogen is contained only in the second protective film 5, the recording/erasing characteristic similar to that in comparative example 1 is shown, and remarkable improvement in the recording/erasing repeatability characteristic cannot be seen compared to those in embodiments 1 to 5 in which nitrogen is contained in the first protective film 3 side. As a result, it is understood that even if nitrogen is contained in the second protective film 5, the effect of improving the recording/erasing characteristic cannot be obtained so much. Furthermore, the recording/erasing repeatability characteristic in comparative example 3 in which nitrogen is contained uniformly in the first protective film 3 is improved to that in comparative example 1, but a remarkable improvement as in embodiments 1 to 5 is not seen. As a result, it is understood that it is effective for improving the recording/erasing characteristic, that the first protective film 3 has a nitrogen concentration distribution.

(Embodiments 6 and 7)

Optical recording media were prepared in the same manner as in embodiment I, except that the recording film 4 was prepared by means of the DC sputtering method by mounting each chip of In, Sb, Te and Au on an In-Sb-Te target and shaking the composition. These were designated as embodiments 6 and 7.

(Comparative Examples 4 to 6)

Optical recording media were prepared in the same manner as embodiments 6 and 7 except that the composition of the recording film 4 was different. These were designated as comparative examples 4 to 6.
The composition of the recording film and the disk properties of the optical recording media in embodiments 6 and 7, and comparative examples 4 to 6 prepared in this manner are shown in Table 1.
From Table 1, it is seen that embodiments 1 to 7 which satisfy the condition that the composition ratio of Au, In, Sb and Te respectively represented by $\alpha$, $\beta$, $\gamma$, and $\delta$, is 0 atomic % $< \alpha \leq 25$ atomic %, 7 atomic % $\leq \beta \leq 18$ atomic %, and when 30 atomic % $\leq \gamma < 45$ atomic %, 32 atomic % $\leq \delta \leq 45$ atomic %, when 45 atomic % $\leq \gamma < 49$ atomic %, 30 atomic % $\leq \delta \leq 45$ atomic %, and when 49 atomic % $\leq \gamma \leq 55$ atomic %, 35 atomic % $\leq \delta \leq 45$ atomic %, provided that 99 atomic % $\leq \alpha + \beta + \gamma + \delta \leq 100$ atomic % , show excellent recording/erasing repeatability characteristics, but comparative examples 4 to 6 in which the composition ratio is outside the above described range do not show excellent recording/erasing repeatability characteristics.
Next, embodiments where the relative speed of the recording film with respect to the light beam at the time of recording and erasing is 5 to 7 m/s are shown below.

(Embodiment 8)

On each of two polycarbonate substrates 2 with lands/grooves having a diameter of 120 mm and a thickness of 0.6 mm, a first protective film 3, a recording film 4, a second protective film 5, a reflective film 6 and a lacquer layer 7 were laminated in that order to form two optical recording media, and these two optical recording media were joined together via an adhesive layer 8 with the lacquer layer 7 sides facing each other, to give an optical recording medium 1 having a construction shown in FIG. 3. The lands/grooves on the substrate 2 had a track pitch of 0.74 $\mu$m and a depth of 70 nm.
The first protective film 3 was prepared by the sputtering method according to the following method, using ZnS- SiO$_2$ (SiO$_2$ : 20 mol%) as a target.
At first, a ZnS- SiO$_2$ film was formed by the RF sputtering method in an atmosphere of argon gas, and at the time when the thickness reached about 133 nm, a mixed gas of argon and N$_2$ was injected as an atmospheric gas to continue the RF sputtering (RF reactive sputtering), to thereby form a composite film having a total thickness of 140 nm. At this time, the partial pressures of the argon gas and the N$_2$ gas in the injected mixed gas were respectively 0.36 Pa and 0.18 Pa.
The recording film 4 was prepared in the same manner as in embodiment 1 except that the thickness thereof was 22 nm. The protective film 5 was prepared in the same manner as in embodiment 1 except that the thickness thereof was 25 nm. The reflective film 6 was prepared in the same manner as in embodiment 1 except that the thickness thereof was 100 nm. The lacquer layer 7 was prepared in the same manner as in embodiment 1. The adhesive layer 8 was formed by applying an ultraviolet curable resin thereon by a screen coating method, and curing the resin by ultraviolet irradiation. The thickness of the adhesive layer 8 after being cured was 30 to 50 $\mu$m.
The recording film 4 after preparing the optical recording medium 1 was amorphous. Therefore, the recording film 4 was sufficiently crystallized by means of a high power semiconductor laser beam having a wavelength of 810 nm, to give an initialized condition.
Evaluation of the optical recording medium 1 was performed by irradiating a semiconductor laser beam having a wavelength of 635 nm through an objective lens having a NA of 0.6 from the substrate 2 side, and stopping down to a spot diameter of about 1 μm onto the surface of the recording film 4. At the time of recording, the laser pulse to be irradiated was made a multiple pulse shape to effect recording. The recording power was 12 mW, the erasing power was 6 mW, the bottom power of the multiple pulse was 1 mW, and the reproduction power was 1 mW.

As for the disk properties, the life span of recording/erasing repeatability was measured by the following method.

That is to say, the recording/erasing repeatability characteristic was shown in the following manner. That is, a random signal in the 8/16 modulation method was repeatedly overwritten at a linear velocity of 6.0 m/s, and reproduction was performed for each overwrite for a predetermined number of times at a linear velocity of 6.0 m/s to thereby measure the jitter in the random signal. The number of times until the jitter exceeded 15% of a standard clock (34.27 ns) was designated as the life span of recording/erasing repeatability.

(Comparative Example 7)

An optical recording medium was prepared in the same manner as in embodiment 8, except that a first protective film 3 was formed without injecting a mixed gas of argon and $N_2$ halfway. At This time, the first protective film 3 was a $ZnS-SiO_2$ ($SiO_2$ : 20 mol%) mixed film having a thickness of 140 nm.

The composition of the recording film and the disk properties of the optical recording medium in embodiments 8 and comparative example 7 prepared in this manner are shown in Table 2.

It is seen that with the optical recording medium in embodiment 8, the recording/erasing repeatability characteristic is improved compared to that of the optical recording medium in comparative example 7.

## TABLE 2

| | Composition of recording film (atomic %) | | | | First protective film composition | Second protective film composition | Disk characteristics |
|---|---|---|---|---|---|---|---|
| | Au | In | Sb | Te | | | Recording/erasing repeatability (Number of times) |
| Embodiment 8 | 7.7 | 4.6 | 59.0 | 28.7 | $ZnS-SiO_2$-N | $ZnS-SiO_2$ | 200,000~1,000,000 |
| Embodiment 9 | 1.0 | 7.2 | 63.9 | 27.9 | $ZnS-SiO_2$-N | $ZnS-SiO_2$ | 200,000~1,000,000 |
| Embodiment 10 | 2.8 | 15.8 | 54.8 | 26.6 | $ZnS-SiO_2$-N | $ZnS-SiO_2$ | 200,000~1,000,000 |
| Comparative example 7 | 7.7 | 4.6 | 59.0 | 28.7 | $ZnS-SiO_2$ | $ZnS-SiO_2$ | 100,000~120,000 |
| Comparative example 8 | 3.0 | 12.9 | 39.3 | 44.8 | $ZnS-SiO_2$-N | $ZnS-SiO_2$ | 1~50 |
| Comparative example 9 | 5.8 | 7.6 | 50.3 | 36.3 | $ZnS-SiO_2$-N | $ZnS-SiO_2$ | 1~50 |
| Comparative example 10 | 12.0 | 16.9 | 40.6 | 30.5 | $ZnS-SiO_2$-N | $ZnS-SiO_2$ | 1~50 |

(Embodiments 9 and 10)

Optical recording media were prepared in the same manner as in embodiment 8, except that the recording film 4 was prepared by means of the DC sputtering method by mounting each chip of In, Sb, Te and Au on an In-Sb-Te target and shaking the composition. These were designated as embodiments 9 and 10.

(Comparative Examples 8 to 10)

Optical recording media were prepared in the same manner as in embodiments 9 and 10 except that the composition of the recording film 4 was different. These were designated as comparative examples 8 to 10.

The composition of the recording film and the disk properties of the optical recording media in embodiments 9 and 10, and comparative examples 8 to 10 prepared in this manner are shown in Table 2.

From Table 2, it is seen that embodiments 8 to 10 which satisfy the condition that the composition ratio of Au, In, Sb and Te respectively represented by $\alpha$, $\beta$, $\gamma$ and $\delta$ is 1 atomic % $\leq \alpha \leq$ 16 atomic %, 8 atomic % $\leq \beta \leq$ 17 atomic %, 41 atomic % $\leq \gamma \leq$ 63 atomic %, and 24 atomic % $\leq \delta \leq$ 36 atomic %, or 0 atomic % $< \alpha \leq$ 17 atomic %, 3 atomic % $\leq \beta <$ 8 atomic %, 51 atomic % $\leq \gamma \leq$ 67 atomic %, and 26 atomic % $\leq 6 \leq$ 33 atomic %, provided that 99 atomic % $\leq \alpha + \beta + \gamma + \delta \leq$ 100 atomic % , show excellent recording/erasing repeatability characteristics, but comparative examples 8 to 10 in which the composition ratio is outside the above described range do not show excellent recording/erasing repeatability characteristics.

Next, embodiments where the relative speed of the recording film with respect to the light beam at the time of recording and erasing is 3 to 5 m/s are shown below.

(Embodiment 11)

An optical recording medium was prepared in the same manner as in embodiment 8 except that the composition of the recording film was different. This was designated as embodiment 11.

Evaluation of the optical recording medium 1 was performed by irradiating a semiconductor laser beam having a wavelength of 635 nm through an objective lens having a NA of 0.6 from the substrate 2 side, and stopping down to a spot diameter of about 1 $\mu$m onto the surface of the recording film 4. At the time of recording, the laser pulse to be irradiated was made a multiple pulse shape to effect recording. The recording power was 11 mW, the erasing power was 5 mW, the bottom power of the multiple pulse was 1 mW, and the reproduction power was 1 mW.

As for the disk properties, the life span of recording/erasing repeatability was measured by the following method.

That is to say, the recording/erasing repeatability characteristic was shown in the following manner. That is, a random signal in the 8/16 modulation method was repeatedly overwritten at a linear velocity of 3.8 m/s, and reproduction was performed for each overwrite for a predetermined number of times at a linear velocity of 3.8 m/s to thereby measure the jitter in the random signal. The number of times until the jitter exceeded 15% of a standard clock (54.11 ns) was designated as the life span of recording/erasing repeatability.

(Comparative Example 11)

An optical recording medium was prepared in the same manner as in embodiment 11, except that a first protective film 3 was formed without injecting a mixed gas of argon and $N_2$ halfway. At this time, the first protective film 3 was a ZnS-SiO$_2$ (SiO$_2$ : 20 mol%) mixed film having a thickness of 140 nm.

The composition of the recording film and the disk properties of the optical recording medium in embodiment 11 and comparative example 11 prepared in this manner are shown in Table 3.

It is seen that with the optical recording medium in embodiment 11, the recording/erasing repeatability characteristic is improved compared to that of the optical recording medium in comparative example 11.

TABLE 3

| | Composition of recording film (atomic %) | | | | First protective film composition | Second protective film composition | Disk characteristics |
|---|---|---|---|---|---|---|---|
| | Au | In | Sb | Te | | | Recording/erasing repeatability (Number of times) |
| Embodiment 11 | 5.2 | 11.4 | 53.6 | 29.8 | ZnS-SiO$_2$-N | ZnS-SiO$_2$ | > 100,000 |
| Embodiment 12 | 0.9 | 11.2 | 59.1 | 28.8 | ZnS-SiO$_2$-N | ZnS-SiO$_2$ | 5,000~50,000 |
| Embodiment 13 | 2.2 | 9.1 | 55.5 | 33.2 | ZnS-SiO$_2$-N | ZnS-SiO$_2$ | 10,000~100,000 |
| Embodiment 14 | 2.8 | 14.1 | 52.5 | 30.6 | ZnS-SiO$_2$-N | ZnS-SiO$_2$ | 5,000~50,000 |
| Embodiment 15 | 3.3 | 12.7 | 51.3 | 32.7 | ZnS-SiO$_2$-N | ZnS-SiO$_2$ | 10,000~100,000 |
| Embodiment 16 | 8.3 | 10.8 | 52.0 | 28.9 | ZnS-SiO$_2$-N | ZnS-SiO$_2$ | 10,000~100,000 |
| Embodiment 17 | 11.2 | 8.4 | 46.8 | 33.6 | ZnS-SiO$_2$-N | ZnS-SiO$_2$ | 10,000~100,000 |
| Embodiment 18 | 15.8 | 5.2 | 40.5 | 38.5 | ZnS-SiO$_2$-N | ZnS-SiO$_2$ | 5,000~50,000 |
| Comparative example 11 | 5.2 | 11.4 | 53.6 | 29.8 | ZnS-SiO$_2$ | ZnS-SiO$_2$ | 20,000~40,000 |
| Comparative example 12 | 1.9 | 8.8 | 62.8 | 26.5 | ZnS-SiO$_2$-N | ZnS-SiO$_2$ | 1~50 |
| Comparative example 13 | 4.0 | 10.7 | 42.8 | 42.5 | ZnS-SiO$_2$-N | ZnS-SiO$_2$ | 1~50 |
| Comparative example 14 | 7.8 | 18.3 | 45.5 | 28.4 | ZnS-SiO$_2$-N | ZnS-SiO$_2$ | 1~50 |
| Comparative example 15 | 9.2 | 5.8 | 59.1 | 25.9 | ZnS-SiO$_2$-N | ZnS-SiO$_2$ | 1~50 |
| Comparative example 16 | 11.6 | 3.5 | 51.2 | 33.7 | ZnS-SiO$_2$-N | ZnS-SiO$_2$ | 1~50 |
| Comparative example 17 | 17.7 | 13.0 | 32.1 | 37.2 | ZnS-SiO$_2$-N | ZnS-SiO$_2$ | 1~50 |
| Comparative example 18 | 22.5 | 7.8 | 41.4 | 28.3 | ZnS-SiO$_2$-N | ZnS-SiO$_2$ | 1~50 |

(Embodiments 12 to 18)

Optical recording media were prepared in the same manner as in embodiment 11, except that the recording film 4 was prepared by means of the DC sputtering method by mounting each chip of In, Sb, Te and Au on an In-Sb-Te target and shaking the composition. These were designated as embodiments 12 to 18.

(Comparative Examples 12 to 18)

Optical recording media were prepared in the same manner as in embodiments 12 to 18 except that the composition of the recording film 4 was different. These were designated as comparative examples 12 to 18.

The composition of the recording film and the disk properties of the optical recording media in embodiments 12 to 18, and comparative examples 12 to 15 prepared in this manner are shown in Table 3.

From Table 2, it is seen that embodiments 11 to 18 which satisfy the condition that the composition ratio of Au, In, Sb and Te respectively represented by $\alpha$, $\beta$, $\gamma$ and 5 is 0 atomic % < $\alpha \le$ 22 atomic %, 4 atomic % $\le \beta \le$ 18 atomic %, 33 atomic % $\le \gamma \le$ 62 atomic %, and 26 atomic % $\le \delta \le$ 42 atomic %, provided that 99 atomic % $\le \alpha + \beta + \gamma + \delta \le$ 100 atomic % , show excellent recording/erasing repeatability characteristics, but comparative examples 12 to 18 in which the composition ratio is outside the above described range do not show excellent recording/erasing repeatability characteristics.

Next, embodiments where the relative speed of the recording film with respect to the light beam at the time of recording and erasing is 7 to 20 m/s are shown below.

(Embodiment 19)

An optical recording medium was prepared in the same manner as in embodiment 8, and was designated as embodiment 19. The evaluation of the optical recording medium 1 was performed as in embodiment 8.

As for the disk properties, the life span of recording/erasing repeatability was measured by the following method.

That is to say, the recording/erasing repeatability characteristics was shown in the following manner. That is, a random signal in the 8/16 modulation method was repeatedly overwritten at a linear velocity of 9.0 m/s, and reproduction was performed for each overwrite for a predetermined number of times at a linear velocity of 9.0 m/s to thereby measure the jitter in the 3T signal. The number of times until the jitter exceeded 15% of a standard clock (34.27 ns) was designated as the life span of recording/erasing repeatability.

(Comparative Example 19)

An optical recording medium was prepared in the same manner as in embodiment 19, except that a first protective film 3 was formed without injecting a mixed gas of argon and $N_2$ halfway. At this time, the first protective film 3 was a ZnS-SiO$_2$ (SiO$_2$ : 20 mol%) mixed film having a thickness of 140 nm.

The composition of the recording film and the disk properties of the optical recording medium in embodiments 19 and comparative example 19 prepared in this manner are shown in Table 4.

It is seen that with the optical recording medium in embodiment 19, the recording/erasing repeatability characteristic is improved compared to that of the optical recording medium in comparative example 19.

TABLE 4

| | Composition of recording film (atomic %) | | | | First protective film composition | Second protective film composition | Disk characteristics |
|---|---|---|---|---|---|---|---|
| | Au | In | Sb | Te | | | Recording/erasing repeatability (Number of times) |
| Embodiment 19 | 7.7 | 4.6 | 59.0 | 28.7 | ZnS-SiO$_2$-N | ZnS-SiO$_2$ | > 30,000 |
| Embodiment 20 | 0.9 | 8.5 | 71.3 | 19.3 | ZnS-SiO$_2$-N | ZnS-SiO$_2$ | 3,000~30,000 |
| Embodiment 21 | 2.1 | 5.3 | 67.1 | 25.5 | ZnS-SiO$_2$-N | ZnS-SiO$_2$ | > 30,000 |
| Embodiment 22 | 3.1 | 14.8 | 52.8 | 29.3 | ZnS-SiO$_2$-N | ZnS-SiO$_2$ | 3,000~30,000 |
| Embodiment 23 | 3.4 | 10.3 | 55.1 | 31.2 | ZnS-SiO$_2$-N | ZnS-SiO$_2$ | > 30,000 |
| Embodiment 24 | 11.4 | 3.6 | 55.6 | 29.5 | ZnS-SiO$_2$-N | ZnS-SiO$_2$ | > 30,000 |
| Embodiment 25 | 20.6 | 5.0 | 46.2 | 28.2 | ZnS-SiO$_2$-N | ZnS-SiO$_2$ | 3,000~30,000 |
| Comparative example 19 | 7.7 | 4.6 | 59.0 | 28.7 | ZnS-SiO$_2$ | ZnS-SiO$_2$ | 10,000~20,000 |
| Comparative example 20 | 1.1 | 5.3 | 75.5 | 18.1 | ZnS-SiO$_2$-N | ZnS-SiO$_2$ | 1 ~50 |
| Comparative example 21 | 3.0 | 11.3 | 50.9 | 34.8 | ZnS-SiO$_2$-N | ZnS-SiO$_2$ | 1 ~50 |
| Comparative example 22 | 6.7 | 17.2 | 58.0 | 18.1 | ZnS-SiO$_2$-N | ZnS-SiO$_2$ | 1 ~50 |
| Comparative example 23 | 9.5 | 3.7 | 72.1 | 14.7 | ZnS-SiO$_2$-N | ZnS-SiO$_2$ | 1 ~50 |
| Comparative example 24 | 13.6 | 0.8 | 63.3 | 22.3 | ZnS-SiO$_2$-N | ZnS-SiO$_2$ | 1 ~50 |
| Comparative example 25 | 17.5 | 12.4 | 42.1 | 28.0 | ZnS-SiO$_2$-N | ZnS-SiO$_2$ | 1 ~50 |
| Comparative example 26 | 25.8 | 8.0 | 44.5 | 21.7 | ZnS-SiO$_2$-N | ZnS-SiO$_2$ | 1 ~50 |

(Embodiments 20 to 25)

Optical recording media were prepared in the same manner as in embodiment 19, except that the recording film 4 was prepared, by means of the DC sputtering method by mounting each chip of In, Sb, Te and Au on an In-Sb-Te target and shaking the composition. These were designated as embodiments 20 to 25. (Comparative Examples 20 to 26)

Optical recording media were prepared in the same manner as in embodiments 20 to 25 except that the composition of the recording film 4 was different. These were designated as comparative examples 20 to 26.

The composition of the recording film and the disk properties of the optical recording media in embodiments 20 to 25, and comparative examples 20 to 26 prepared in this manner are shown in Table 4.

From Table 4, it is seen that embodiments 19 to 25 which satisfy the condition that the composition ratio of Au, In, Sb and Te respectively represented by $\alpha$, $\beta$, $\gamma$ and $\delta$ is 0 atomic % $< \alpha \le$ 25 atomic %, 1 atomic % $\le \beta \le$ 17 atomic %, 43 atomic % $\le \gamma \le$ 75 atomic %, and 15 atomic % $\le \delta \le$ 34 atomic %, provided that 99 atomic % $\le \alpha + \beta + \gamma + \delta \le$ 100 atomic % , show excellent recording/erasing repeatability characteristics, but comparative examples 19 to 25 in which the composition ratio is outside the above described range do not show excellent recording/erasing repeatability characteristics.

INDUSTRIAL APPLICABILITY

Since the present invention can provide an optical recording medium capable of high-density recording in which recording/erasing repeatability is remarkably improved, and a protective film suitable for an optical recording medium, the present invention has significant industrial applicability.

**Claims**

1.  An optical recording medium comprising at least a first protective film, a recording film, a second protective film and a reflective film which are laminated in that order on a substrate substantially transparent with respect to a light beam to be used, characterized in that

    said second protective film comprises a mixed film of ZnS and $SiO_2$, and
    said first protective film contains nitrogen in a mixed film of ZnS and $SiO_2$, such that the concentration of nitrogen is higher on said recording film side than on said substrate side.

2.  An optical recording medium according to claim 1, wherein said first protective film is a composite film having a mixed film of ZnS and $SiO_2$ on said substrate side, and having a mixed film containing ZnS, $SiO_2$ and nitrogen on said recording film side.

3.  An optical recording medium according to claim 1, wherein said first protective film comprises a mixed film containing ZnS and $SiO_2$ and nitrogen, such that the nitrogen concentration on a face on said substrate side of said mixed film is approximately 0 atomic %, with the nitrogen concentration gradually increasing from said substrate side toward said recording film side.

4.  An optical recording medium according to claim 1, wherein said recording film comprises an Au-In-Sb-Te alloy.

5.  An optical recording medium according to claim 1 wherein said second protective film contains nitrogen.

6.  A protective film for an optical recording medium wherein nitrogen is contained in a ZnS and $SiO_2$ mixed film, and the concentration of said nitrogen is made higher on one side than on the other side in the direction of film thickness.

7.  A protective film for an optical recording medium according to claim 6, wherein said protective film is a composite film with said one side comprising a mixed film containing ZnS, $SiO_2$ and nitrogen, and said other side comprising a mixed film of ZnS and $SiO_2$.

8.  A protective film for an optical recording medium according to claim 6, wherein said protective film is a mixed film containing ZnS, $SiO_2$ and nitrogen, with the nitrogen concentration on a face of said other side of the film being substantially 0 atomic %, and gradually increasing toward said one side.

# FIG.1

# FIG.2

# FIG.3

# INTERNATIONAL SEARCH REPORT

| | International application No. |
|---|---|
| | PCT/JP99/00983 |

**A. CLASSIFICATION OF SUBJECT MATTER**
Int.Cl⁶ G11B7/24

According to International Patent Classification (IPC) or to both national classification and IPC

**B. FIELDS SEARCHED**

Minimum documentation searched (classification system followed by classification symbols)
Int.Cl⁶ G11B7/24

Documentation searched other than minimum documentation to the extent that such documents are included in the fields searched
| Jitsuyo Shinan Koho | 1922-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 2-123533, A (NEC Home Electronics Ltd.), 11 May, 1990 (11. 05. 90), Full text (Family: none) | 1-8 |
| Y | JP, 3-232133, A (Matsushita Electric Industrial Co., Ltd.), 16 October, 1991 (16. 10. 91), Full text (Family: none) | 1-8 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 7 May, 1999 (07. 05. 99) | 25 May, 1999 (25. 05. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)